# EUROPÄISCHE PATENTSCHRIFT

(11) **EP 4 251 489 B1**
(45) Veröffentlichungstag und Bekanntmachung des Hinweises auf die Patenterteilung: **03.12.2025**
(21) Anmeldenummer: 21844306.7
(22) Anmeldetag: 22.12.2021
(51) Int. Cl.: B60W 30/18, B60W 40/06

(54) **VERFAHREN ZUM ERZEUGEN EINER SPURWECHSELFREIGABE EINES ZUMINDEST TEILWEISE ASSISTIERT BETRIEBENEN KRAFTFAHRZEUGS, COMPUTERPROGRAMMPRODUKT, SOWIE SPURHALTEASSISTENZSYSTEM**
METHOD FOR GENERATING A CHANGE OF LANE CLEARANCE FOR A MOTOR VEHICLE OPERATED IN AN AT LEAST PARTIALLY ASSISTED MANNER, COMPUTER PROGRAM PRODUCT, AND LANE-KEEPING ASSISTANCE SYSTEM
PROCÉDÉ POUR GÉNÉRER UNE AUTORISATION DE CHANGEMENT DE VOIE POUR UN VÉHICULE AUTOMOBILE COMMANDÉ AU MOINS PARTIELLEMENT DE MANIÈRE ASSISTÉE, PRODUIT-PROGRAMME D'ORDINATEUR, ET SYSTÈME D'ASSISTANCE DE SUIVI DE VOIE

(30) Priorität: 06.01.2021 DE 102021200056
(43) Veröffentlichungstag der Anmeldung: 04.10.2023
(73) Patentinhaber: VOLKSWAGEN AKTIENGESELLSCHAFT, 38440 Wolfsburg (DE)
(72) Erfinder: MÜNNING, Daniel, 38124 Braunschweig (DE); STREHLOW, Thomas, 38102 Braunschweig (DE)
(86) Internationale Anmeldenummer: PCT/EP2021/087305
(87) Internationale Veröffentlichungsnummer: WO 2022/148657

(56) Entgegenhaltungen:
- DE-A1- 102014 002 115
- DE-A1- 102015 110 969
- GB-A- 2 579 023

## Beschreibung

Die Erfindung betrifft ein Verfahren zum Erzeugen einer Spurwechselfreigabe eines zumindest teilweise assistiert betriebenen Kraftfahrzeugs mittels eines Spurwechselassistenzsystems, bei welchem mittels einer Erfassungseinrichtung des Spurwechselassistenzsystems eine zu einer Egospur benachbarte Spur einer Fahrbahn mit zumindest zwei Spuren erfasst wird, und in Abhängigkeit von einem Kriterium die erfasste benachbarte Spur für die Spurwechselfreigabe mittels einer elektronischen Recheneinrichtung des Spurwechselassistenzsystems bewertet wird, ob ein Spurwechsel auf die benachbarte Spur möglich ist, und bei einer positiven Bewertung die Spurwechselfreigabe mittels der elektronischen Recheneinrichtung erzeugt wird. Ferner betrifft die Erfindung ein Computerprogrammprodukt sowie ein Spurwechselassistenzsystem.

Aus dem Kraftfahrzeugbau sind bereits zumindest teilweise assistiert betriebene Kraftfahrzeuge bekannt. Bei diesen Kraftfahrzeugen werden Fahrfunktionen durch das Kraftfahrzeug assistiert betrieben. Beispielsweise kann eine Querbeschleunigungs- und/oder eine Längsbeschleunigungseinrichtung des Kraftfahrzeugs assistiert betrieben werden. Insbesondere können solche Assistenzsysteme beispielsweise bei einem Spurwechsel einen Nutzer des Kraftfahrzeugs, insbesondere einen Fahrer des Kraftfahrzeugs, unterstützen. Solche Spurwechselassistenzsysteme sind auch als sogenannte Travel Assists bekannt. Bei einem solchen Spurwechselassistenzsystem kann ein sogenannter assistierter Spurwechsel durchgeführt werden, bei dem das Kraftfahrzeug nach einer Fahrerinitiierung, zum Beispiel durch Blinken, die Fahrspur auf zum Beispiel einer Autobahn assistiert wechseln kann.

Die US 2007/0126565 A1 beschreibt ein Fahrerassistenzsystem zur Überwachung von Blindzonen. Die Anforderungen an die Zuverlässigkeit dieser Art von Fahrerassistenzsystem sind sehr hoch. Aus diesem Grund wird ein Verfahren zur Blindzonenüberwachung in Kraftfahrzeugen vorgeschlagen, bei dem Informationen aus der Fahrzeugumgebung erfasst werden, um andere Verkehrsteilnehmer zu erkennen. Unter der Bedingung eines beabsichtigten Spurwechsels und der Anwesenheit anderer Verkehrsteilnehmer im toten Bereich des eigenen Kraftfahrzeugs wird eine Warnung an den Fahrer ausgegeben. Bevor jedoch eine Fahrerwarnung erfolgen kann, wird geprüft, ob ein Spurwechsel aufgrund der Verkehrsinfrastruktur überhaupt möglich ist. Fahrwarnungen werden unterdrückt, wenn aufgrund der Überprüfung ein Spurwechsel nicht möglich ist.

Die US 2016/0176341 A1 offenbart ein fahrzeuginternes System zum Identifizieren von Nur-Ausfahrspuren und gemeinsam genutzten Ausfahrspuren auf einer Fahrbahn mit einer ersten Kamera zum Erhalten von Bilddaten bezüglich Fahrbahnmarkierungen auf der Fahrbahn, einer zweiten Kamera zum Erhalten von Bilddaten bezüglich Ausfahrzeichen, einem Fahrbahnmarkierungs-Erfassungsmodul zum Erfassen von Fahrbahnmarkierungen auf der Fahrbahn, einem Ausfahrzeichen-Erfassungsmodul zum Erfassen von Ausfahrzeichen und einem Ausfahrzeichen-Analysator zum Erfassen von Pfeilen auf den erfassten Ausfahrzeichen. Das System kategorisiert die erkannten Fahrbahnmarkierungen in eine der folgenden Kategorien: Gestrichelte Fahrbahnmarkierungen mit Standardfrequenz, gestrichelte Fahrbahnmarkierungen mit hoher Frequenz und feste Fahrbahnmarkierungen, und identifiziert eine reine Ausfahrtsspur und eine gemeinsame Ausfahrtsspur als Reaktion auf die Kategorisierung der erkannten Fahrbahnmarkierungen und die Merkmale der erkannten Pfeile.

Die DE 10 2015 110 969 A1 betrifft ein Verfahren zum Ausgeben eines Fahrhinweises, bei welchem während ein Kraftfahrzeug auf einer ersten Fahrspur einer Fahrbahn mit zumindest zwei Fahrspuren bewegt wird, mittels einer Steuereinrichtung Sensordaten von einem Umfeldsensor empfangen werden, anhand der Sensordaten Nahverkehrsflussdaten, welchen einen jeweiligen Verkehrsfluss auf den zumindest zwei Fahrspuren in einem vorbestimmten Erfassungsbereich des Umfeldsensors beschreiben, bestimmt werden, und der Fahrhinweis in Abhängigkeit von den Nahverkehrsflussdaten ausgegeben wird, wobei der Fahrhinweis einen Spurwechsel des Kraftfahrzeugs von der ersten Fahrspur auf eine zweite der zumindest zwei Fahrspuren betrifft, wobei mittels der Steuereinrichtung Verkehrsdaten empfangen werden, anhand der Verkehrsdaten Fernverkehrsflussdaten bestimmt werden, welche den jeweiligen Verkehrsfluss auf den zumindest zwei Fahrspuren außerhalb des Erfassungsbereichs des Umfeldsensors beschreiben und der Fahrhinweis zusätzlich in Abhängigkeit von den Fernverkehrsflussdaten ausgegeben wird.

Aufgabe der vorliegenden Erfindung ist es, ein Verfahren, ein Computerprogrammprodukt sowie ein Spurwechselassistenzsystem zu schaffen, mittels welchem zuverlässiger eine Spurwechselfreigabe für einen Spurwechsel des Kraftfahrzeugs erfolgen kann.

Diese Aufgabe wird durch ein Verfahren, ein Computerprogrammprodukt sowie durch ein Spurwechselassistenzsystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Erzeugen einer Spurwechselfreigabe eines zumindest teilweise assistiert betriebenen Kraftfahrzeugs mittels eines Spurwechselassistenzsystems, bei welchem mittels einer Erfassungseinrichtung des Spurwechselassistenzsystems eine zu einer Egospur benachbarte Spur einer Fahrbahn mit zumindest zwei Spuren erfasst wird und in Abhängigkeit von einem Kriterium die erfasste benachbarte Spur für die Spurwechselfreigabe mittels der elektronischen Recheneinrichtung des Spurwechselassistenzsystems bewertet wird, ob ein Spurwechsel auf die benachbarte Spur möglich ist, und bei einer positiven Bewertung die Spurwechselfreigabe mittels der elektronischen Recheneinrichtung erzeugt wird.

Es ist vorgesehen, dass zumindest ein fahrdynamischer Parameter des Kraftfahrzeugs und/oder eines weiteren Kraftfahrzeugs als das Kriterium bei der Bewertung, ob ein Spurwechsel auf die benachbarte Spur möglich ist, berücksichtigt wird.

Dadurch kann verbessert eine Spurwechselfreigabe erzeugt werden. Insbesondere können somit die fahrdynamischen Parameter des Kraftfahrzeugs beziehungsweise von weiteren Kraftfahrzeugen berücksichtigt werden. Somit kann zuverlässig erkannt werden, ob es sich bei der benachbarten Spur beispielsweise um eine Ausfahrt oder um eine Spur handelt, auf welche gewechselt werden kann.

Bei der Fahrbahn handelt es sich vorliegend insbesondere um eine Autobahn, welche insbesondere zwei Spuren aufweist. Unter Egospur ist vorliegend zu verstehen, dass sich das Kraftfahrzeug auf dieser Spur befindet.

Sollte sich beispielsweise das Kraftfahrzeug in Deutschland auf einer rechten Spur der Autobahn befinden, so erkennt die Erfassungseinrichtung, welche beispielsweise als Kamera, Radarsensor, Ultraschallsensor oder Lidarsensor ausgebildet sein kann, bei Ausfahrten rechts eine gestrichelte Linie und eine Nachbarspur. Es soll jedoch nun verhindert werden, dass auf die Ausfahrtsspur gewechselt wird. Insbesondere wird hierbei genutzt, dass die Spuraufweitung beispielsweise in Deutschland von zwei auf drei Spuren lediglich auf der linken Spur stattfindet. Die Ausfahrt ist dabei vorwiegend auf der rechten Spur abgehend und geht nach rechts, wobei dies beispielsweise im Linksverkehr andersherum anzusehen ist.

Es wird eine Ausfahrtsspur der Fahrbahn als benachbarte Spur erfasst und bewertet und bei einer erkannten Ausfahrtsspur die Spurwechselfreigabe unterdrückt. Insbesondere kann vorgesehen sein, dass bei einer erkannten Ausfahrtsspur der Fahrer des Kraftfahrzeugs darauf hingewiesen wird, dass es sich dabei nicht um eine Fahrspur handelt, welche zur Geradeausfahrt geeignet ist. Insbesondere kann beispielsweise, sollte der Nutzer des Kraftfahrzeugs dennoch einen Fahrspurwechsel auf die Ausfahrtsspur wünschen, so muss eine aktive Lenkung durch den Fahrer initiiert werden. Somit können fehlerhafte Fahrspurwechsel auf eine Ausfahrtsspur verhindert werden.

Ferner wird auf Basis von Geschwindigkeitsvergleichen von dem Kraftfahrzeug und/oder von den weiteren Kraftfahrzeugen auf der Egospur und auf der benachbarten Spur eine Ausfahrtsspur erkannt. Insbesondere ist dabei vorgesehen, dass auf einer Ausfahrtsspur eine Verzögerung der Kraftfahrzeuge durchgeführt wird, da oftmals hierbei die Ausfahrtsspur über eine Kurve von der Autobahn ablenkt. Somit muss ein Bremsvorgang durch das Kraftfahrzeug initiiert werden. Durch die Vergleiche der Geschwindigkeiten auf der Egospur sowie auf der benachbarten Spur kann somit bestimmt werden, dass beispielsweise die Egospur eine weitere Geradeausfahrt auf der Autobahn ermöglicht und die benachbarte Spur eine Ausfahrtsspur ist. Insbesondere, sollte die Geschwindigkeit auf der Egospur größer sein als auf der benachbarten Spur, so kann auf eine Ausfahrtsspur geschlossen werden.

Gemäß einer vorteilhaften Ausgestaltungsform wird eine aktuelle Fahrtrichtung des Kraftfahrzeugs und/oder des weiteren Kraftfahrzeugs als fahrdynamischer Parameter berücksichtigt. Insbesondere kann dies beispielsweise auf Basis von Informationen der Navigationseinrichtung des Kraftfahrzeugs zurückgeführt werden. Ferner kann das Kraftfahrzeug mit dem weiteren Kraftfahrzeug beispielsweise über eine Fahrzeug-zu-Fahrzeug (V2V)-Kommunikation die Fahrtrichtung austauschen, sodass diese berücksichtigt werden kann.

Gemäß einer weiteren vorteilhaften Ausgestaltungsform weist das Spurwechselassistenzsystem eine Schwarmdatenempfangseinrichtung auf und mittels der Schwarmdatenempfangseinrichtung werden fahrdynamische Schwarmdaten bezüglich einer Vielzahl von weiteren Kraftfahrzeugen von einer kraftfahrzeugexternen elektronischen Recheneinrichtung empfangen und die Schwarmdaten als das Kriterium bei der Bewertung berücksichtigt. Insbesondere betreffen die Schwarmdaten historische Daten von einer Vielzahl von Kraftfahrzeugen. Diese Schwarmdaten können dann in der kraftfahrzeugexternen elektronischen Recheneinrichtung abgespeichert werden.

Die Schwarmdaten werden dann an die Schwarmdatenempfangseinrichtung des Kraftfahrzeugs übertragen. Dazu bedient man sich vorzugsweise drahtloser Telekommunikationstechnik. Die Übertragung erfolgt entweder direkt zwischen der kraftfahrzeugexternen elektronischen Recheneinrichtung und der Schwarmdatenempfangsrichtung und/oder mittels Fahrzeug-zu-Fahrzeug (V2V)-Kommunikation oder Car2X-Kommunikation.

Beispielsweise können die Schwarmdaten die aktuelle Fahrtrichtung der weiteren Kraftfahrzeuge in der Vergangenheit an dieser Stelle berücksichtigen. Somit kann eine Überprüfung stattfinden, ob die erkannte benachbarte Spur zum Spurwechsel freigegeben werden kann.

Ferner hat es sich als vorteilhaft erwiesen, wenn als fahrdynamische Schwarmdaten Geschwindigkeiten von weiteren Kraftfahrzeugen empfangen und ausgewertet werden. Beispielsweise können Schwarmdaten von den weiteren Kraftfahrzeugen überprüft werden, wobei diese Schwarmdaten die Geschwindigkeit auf der Egospur der weiteren Kraftfahrzeuge betrifft. Ferner können auch die benachbarten Spuren bezüglich der Geschwindigkeiten ausgewertet werden. Sollte beispielsweise festgestellt werden, dass auf die benachbarte rechte Spur von einer Vielzahl von Kraftfahrzeugen gewechselt wurde und diese beispielsweise abbremsen, so kann eine Ausfahrt vermutet werden. Sollte jedoch beispielsweise die Vielzahl von Kraftfahrzeugen auf eine linke Fahrspur ausgeschoren sein und dabei die Geschwindigkeit beibehalten haben, so kann davon ausgegangen werden, dass es sich um eine Aufweitung der Fahrbahn, beispielsweise von zwei auf drei Spuren, handelt.

In einer weiteren vorteilhaften Ausgestaltungsform wird auf Basis der Schwarmdaten eine neue benachbarte und für den Spurwechsel freigegebene Spur erkannt. Sollte beispielsweise auf einer Autobahn von zwei Spuren auf drei Spuren vergrößert werden, so kann dies auf Basis der Schwarmdaten, insbesondere auf Basis der Geschwindigkeiten, festgestellt werden. Die Geschwindigkeiten können beispielsweise verglichen werden, und sollte plötzlich eine benachbarte Spur erfasst werden, wobei sich hierbei die Geschwindigkeiten nicht im Wesentlichen verändert haben, so kann darauf geschlossen werden, dass es sich um eine Spuraufweitung handelt. So eine Spuraufweitung kann auf diesem Wege deutlich schneller und zuverlässiger erkannt werden, als durch Kamera- oder sonstige autarke Sensorik im Fahrzeug.

Ebenfalls vorteilhaft ist, wenn die benachbarte Spur durch Vergleichen von Schwarmdaten von unterschiedlichen Kraftfahrzeugen auf Basis von unterschiedlich gefahrenen Wegen der Vielzahl von Kraftfahrzeugen erkannt wird. Sollte beispielsweise häufig an bestimmten Wegpunkten von einer Vielzahl von Kraftfahrzeugen der Weg nach rechts oder nach links gesucht werden, so kann davon ausgegangen werden, dass es sich entweder um eine Ausfahrt handelt oder um eine Aufweitung der Fahrspur. Insbesondere können die gefahrenen Wege beispielsweise bezüglich eines Abstands zueinander oder eine Korrelation oder Integrale bewertet werden, wobei ebenfalls möglich ist, dass ein Vergleich der entsprechenden Ableitungen der gefahrenen Wege durchgeführt werden kann. Diese können dann wiederum in Abhängigkeit eines vorgegebenen Schwellwerts bewertet werden. Ferner kann hierbei ebenfalls die Fahrtrichtung mitberücksichtigt werden. Sollte dann beispielsweise bestimmt werden, dass eine Ausfahrt vorliegt, so erfolgt keine Spurwechselfreigabe. Sollte beispielsweise keine Ausfahrt detektiert werden, so kann eine Freigabe erfolgen.

Bei dem vorgestellten Verfahren handelt es sich insbesondere um ein computerimplementiertes Verfahren. Hierzu betrifft die Erfindung auch ein Computerprogrammprodukt mit Programmcodemitteln, welche eine elektronische Recheneinrichtung dazu veranlassen, wenn die Programmcodemittel auf der elektronischen Recheneinrichtung abgearbeitet werden, die Schritte des Verfahrens nach dem vorhergehenden Aspekt durchzuführen. Das Computerprogrammprodukt kann dabei ebenfalls auf einem erfindungsgemäßen computerlesbaren Speichermedium abgespeichert sein.

Ein weiterer Aspekt der Erfindung betrifft ein Spurwechselassistenzsystem zum Erzeugen einer Spurwechselfreigabe eines zumindest teilweise assistiert betriebenen Kraftfahrzeugs, mit zumindest einer Erfassungseinrichtung und mit einer elektronischen Recheneinrichtung, wobei das Spurwechselassistenzsystem zum Durchführen eines Verfahrens nach dem vorhergehenden Aspekt ausgebildet ist.

Ein nochmals weiterer Aspekt der Erfindung betrifft ein Kraftfahrzeug mit einem Spurwechselassistenzsystem nach dem vorhergehenden Aspekt. Das Kraftfahrzeug ist dabei insbesondere zumindest teilweise assistiert betrieben.

Vorteilhafte Ausgestaltungsformen des Verfahrens sind als vorteilhafte Ausgestaltungsformen des Spurwechselassistenzsystems sowie des Kraftfahrzeugs anzusehen. Das Spurwechselassistenzsystem sowie das Kraftfahrzeug weisen dazu gegenständliche Merkmale auf, welche eine Durchführung des Verfahrens oder eine vorteilhafte Ausgestaltungsform davon ermöglichen.

Zu der Erfindung gehören auch Weiterbildungen des erfindungsgemäßen Spurwechselassistenzsystems sowie des Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Spurwechselassistenzsystems und des Kraftfahrzeugs hier nicht noch einmal beschrieben. Die Erfindung umfasst auch die Kombinationen der Merkmale der beschriebenen Ausführungsformen.

Im Folgenden werden Ausführungsbeispiele der Erfindung beschrieben. Hierzu zeigen:
- Fig. 1: eine schematische Draufsicht auf eine Ausführungsform eines Kraftfahrzeugs mit einer Ausführungsform eines Spurwechselassistenzsystems; und
- Fig. 2: ein schematisches Blockschaltbild einer Ausführungsform eines Spurwechselassistenzsystems.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

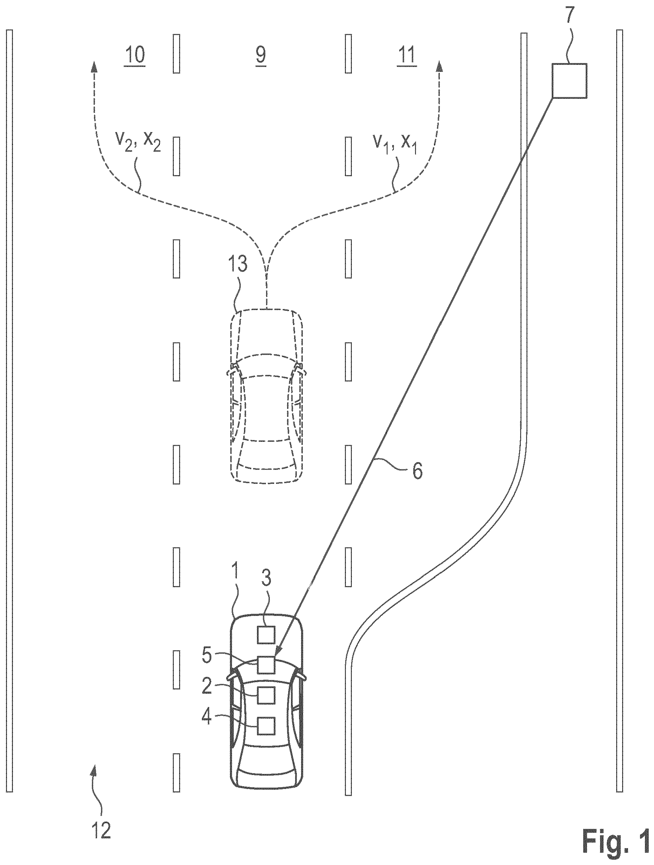

Fig. 1 zeigt eine schematische Draufsicht auf eine Ausführungsform eines Kraftfahrzeugs 1 mit einem Spurwechselassistenzsystem 2. Das Spurwechselassistenzsystem 2 weist zumindest eine Erfassungseinrichtung 3 sowie eine elektronische Recheneinrichtung 4 auf.

Ferner kann das Spurwechselassistenzsystem 2 auch eine Schwarmdatenempfangseinrichtung 5 aufweisen, welche zum Empfangen von Schwarmdaten 6 von einer kraftfahrzeugexternen elektronischen Recheneinrichtung 7 ausgebildet ist. Das Kraftfahrzeug 1 ist dabei insbesondere zumindest teilweise assistiert betrieben.

Beim Verfahren zum Erzeugen einer Spurwechselfreigabe 8 des zumindest teilweise assistiert betriebenen Kraftfahrzeugs 1 mittels des Spurwechselassistenzsystems 2 wird mittels der Erfassungseinrichtung 3 des Spurwechselassistenzsystems 2 eine zu einer Egospur 9 benachbarte Spur 10, 11 einer Fahrbahn 12 mit zumindest zwei Spuren 9, 10, 11 für die Spurwechselfreigabe 8 mittels der elektronischen Recheneinrichtung 4 des Spurwechselassistenzsystems 2 bewertet, ob ein Spurwechsel auf die benachbarte Spur 10, 11 möglich ist, und bei einer positiven Bewertung die Spurwechselfreigabe 8 mittels der elektronischen Recheneinrichtung 4 erzeugt wird.

Es ist dabei vorgesehen, dass zumindest ein fahrdynamischer Parameter v₁, x₁, v₂, x₂, 14 des Kraftfahrzeugs 1 und/oder des weiteren Kraftfahrzeugs 13, welches vorliegend gestrichelt dargestellt ist, als das Kriterium bei der Bewertung, ob ein Spurwechsel auf die benachbarte Spur 10, 11 möglich ist, berücksichtigt wird.

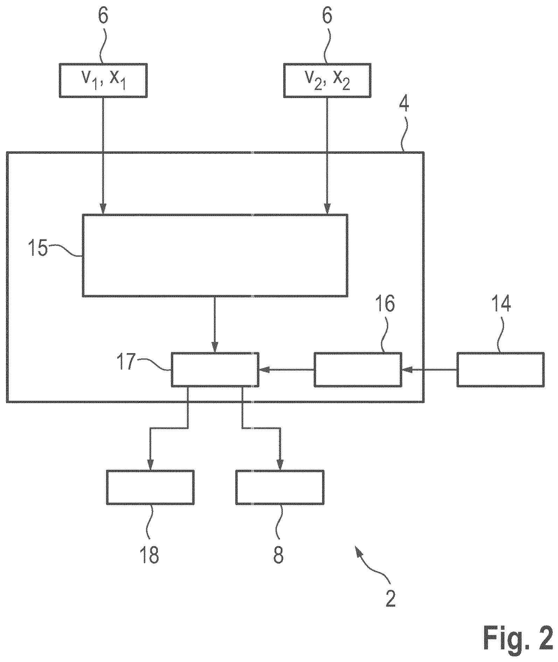

Insbesondere kann beispielsweise vorgesehen sein, dass eine aktuelle Fahrtrichtung 14 (Fig. 2) des Kraftfahrzeugs 1 und/oder des weiteren Kraftfahrzeugs 13 als fahrdynamische Parameter v₁, x₁, v₂, x₂, 14 berücksichtigt wird. Des Weiteren kann vorgesehen sein, dass das Spurwechselassistenzsystem 2 die Schwarmdatenempfangseinrichtung 5 aufweist und mittels der Schwarmdatenempfangseinrichtung 5 fahrdynamische Schwarmdaten 6 bezüglich der Vielzahl von weiteren Kraftfahrzeugen 13 von der kraftfahrzeugexternen elektronischen Recheneinrichtung 7 empfangen werden und die Schwarmdaten 6 als das Kriterium bei der Bewertung berücksichtigt werden. Insbesondere können beispielsweise als fahrdynamische Schwarmdaten gefahrene Wege x₁, x₂ der Vielzahl von Kraftfahrzeugen 13 erkannt werden. Ferner können auch Geschwindigkeiten v₁, v₂ als fahrdynamische Schwarmdaten 6 empfangen und ausgewertet werden.

Fig. 1 zeigt insbesondere, dass eine Ausfahrtsspur 11 als benachbarte Spur 10, 11 erfasst und bewertet wird und bei einer erkannten Ausfahrtsspur 11 die Spurwechselfreigabe 8 unterdrückt wird. Ferner kann auf Basis von Geschwindigkeitsvergleichen von dem Kraftfahrzeug 1 und/oder von den weiteren Kraftfahrzeugen 13 auf der Egospur 9 und auf der benachbarten Spur 10, 11 die Ausfahrtsspur 11 erkannt werden.

Fig. 2 zeigt ein schematisches Blockschaltbild einer Ausführungsform des Assistenzsystems 2. Vorliegend ist insbesondere gezeigt, dass die Schwarmdaten 6, insbesondere die fahrdynamischen Schwarmdaten 6, an die elektronische Recheneinrichtung 4 zur Auswertung übergeben werden. Hierbei können sowohl der gefahrene Weg x₁, x₂ sowie die Geschwindigkeiten v₁, v₂ berücksichtigt werden. Beispielsweise kann bei dem Vergleich der gefahrenen Wege x₁, x₂ dann vorgesehen sein, dass die Auswertung 15 bezüglich eines Gütekriteriums durchgeführt wird. Hierbei kann beispielsweise der Abstand oder eine Korrelation sowie ein Integral genutzt werden, um zu bestimmen, ob es sich bei den Spuren 9, 10, 11 um beispielsweise eine Ausfahrtsspur 11, um die Egospur 9 oder um eine neue Spur 10 handelt. Hierbei wird ebenfalls die Fahrtrichtung 14 berücksichtigt, wobei hierzu ein Kennfeld 16 erzeugt wird. Sollte dann das Gütekriterium oberhalb eines vorgegebenen Schwellwerts 17 liegen, so kann bestimmt werden, dass es sich um eine Ausfahrtsspur 11 handelt und keine Spurwechselfreigabe 8 erfolgt, was vorliegend durch den Block 18 dargestellt ist. Sollte das Gütekriterium größer sein als der Schwellwert 17, so kann die Spurwechselfreigabe 8 erfolgen.

Ferner kann auf Basis des vorgestellten Verfahrens auch überprüft werden, ob es sich um eine zusätzliche Fahrspur, insbesondere um die neue Spur 10, handelt. Dies kann ebenfalls sowohl auf Basis der Geschwindigkeiten v₁, v₂ sowie der gefahrenen Wege x₁, x₂ realisiert werden.

Ferner kann auf Basis des Vergleichs bestimmt werden, ob es sich um die Ausfahrtsspur 11 handelt oder nicht. Insbesondere sind hierbei die unterschiedlichen Geschwindigkeiten v₁, v₂ relevant. Hierbei wird insbesondere angenommen, dass in der Ausfahrtsspur 11 es eine Situation gibt, wo die weiteren Kraftfahrzeuge 13 verzögern beziehungsweise bremsen und somit langsamer sind als auf der Egospur 9. Dies kann ebenfalls genutzt werden. Insbesondere können hierbei die Geschwindigkeitsvergleiche durchgeführt werden. Auf Basis der Schwarmdaten 6 können dann beispielsweise die einzelnen Geschwindigkeiten v₁, v₂, die durchschnittlichen Geschwindigkeiten v₁, v₂ sowie die Ableitungen von v₁ und v₂, was insbesondere einer Verzögerung entspricht, genutzt werden. Hierbei kann ferner berücksichtigt werden, dass dies nur für die nächsten 200 Meter möglich ist. Sollten dann wiederum die Unterschiede zwischen den Geschwindigkeiten v₁, v₂ größer sein, als beispielsweise das Kennfeld 16, so kann bestimmt werden, dass auf der langsamen Spur die Ausfahrtsspur 11 ist, wobei diese dann stärkere Verzögerungen aufweist. Sollte keine eindeutige Zuordnung möglich sein, so kann insbesondere davon ausgegangen werden, dass es sich nicht um eine Ausfahrtsspur 11 handelt.

### Bezugszeichenliste

- 1: Kraftfahrzeug
- 2: Spurwechselassistenzsystem
- 3: Erfassungseinrichtung
- 4: elektronische Recheneinrichtung
- 5: Schwarmdatenempfangseinrichtung
- 6: Schwarmdaten
- 7: kraftfahrzeugexterne elektronische Recheneinrichtung
- 8: Spurwechselfreigabe
- 9: Egospur
- 10: neue Spur
- 11: Ausfahrtsspur
- 12: Fahrbahn
- 13: weitere Kraftfahrzeuge
- 14: Fahrtrichtung
- 15: Auswertung
- 16: Kennfeld
- 17: Schwellwert
- 18: Block
- x₁: gefahrener Weg
- x₂: gefahrener Weg
- v₁: Geschwindigkeit
- v₂: Geschwindigkeit

## Patentansprüche

1. Verfahren zum Erzeugen einer Spurwechselfreigabe (8) eines zumindest teilweise assistiert betriebenen Kraftfahrzeugs (1) mittels eines Spurwechselassistenzsystems (2), bei welchem mittels einer Erfassungseinrichtung (3) des Spurwechselassistenzsystems (2) eine zu einer Egospur (9) benachbarte Spur (10 ,11) einer Fahrbahn (12) mit zumindest zwei Spuren (9, 10, 11) erfasst wird, und in Abhängigkeit von einem Kriterium die erfasste benachbarte Spur (10 ,11) für die Spurwechselfreigabe (8) mittels einer elektronischen Recheneinrichtung (4) des Spurwechselassistenzsystems (2) bewertet wird, ob ein Spurwechsel auf die benachbarte Spur (10, 11) möglich ist, und bei einer positiven Bewertung die Spurwechselfreigabe (8) mittels der elektronischen Recheneinrichtung (4) erzeugt wird, wobei
zumindest ein fahrdynamischer Parameter (v₁, x₁, v₂, x₂, 14) des Kraftfahrzeugs (1) und/oder eines weiteren Kraftfahrzeugs (13) als das Kriterium bei der Bewertung, ob ein Spurwechsel auf die benachbarte Spur (10 ,11) möglich ist, berücksichtigt wird, **dadurch gekennzeichnet, dass**
eine Ausfahrtspur (11) der Fahrbahn (12) als benachbarte Spur (10 ,11) erfasst und bewertet wird und bei einer erkannten Ausfahrtspur (11) die Spurwechselfreigabe (8) unterdrückt wird, wobei auf Basis von Geschwindigkeitsvergleichen von dem Kraftfahrzeug (1) auf der Egospur (9) und/oder von weiteren Kraftfahrzeugen (13) auf der Egospur (9) und auf der benachbarten Spur (10, 11) eine Ausfahrtsspur (11) erkannt wird, wobei sollte die Geschwindigkeit (v1, v2) auf der Egospur (9) größer sein als auf der benachbarten Spur (10 ,11), so kann auf eine Ausfahrtsspur (11) geschlossen werden.

2. Verfahren nach Anspruch 1,
**dadurch gekennzeichnet, dass**
eine aktuelle Fahrtrichtung (14) des Kraftfahrzeugs (1) und/oder des weiteren Kraftfahrzeugs (13) als fahrdynamischer Parameter (v₁, x₁, v₂, x₂, 14) berücksichtigt wird.

3. Verfahren nach Anspruch 1 oder 2,
**dadurch gekennzeichnet, dass**
das Spurwechselassistenzsystem (2) eine Schwarmdatenempfangseinrichtung (5) aufweist und mittels der Schwarmdatenempfangseinrichtung (5) fahrdynamische Schwarmdaten (6) bezüglich einer Vielzahl von weiteren Kraftfahrzeugen (13) von einer kraftfahrzeugexternen elektronischen Recheneirichtung (7) empfangen werden und die fahrdynamischen Schwarmdaten (6) als das Kriterium bei der Bewertung berücksichtigt werden.

4. Verfahren nach Anspruch 3,
**dadurch gekennzeichnet, dass**
als fahrdynamische Schwarmdaten (6) Geschwindigkeiten (v₁, v₂) von weiteren Kraftfahrzeugen (13) empfangen und ausgewertet werden.

5. Verfahren nach Anspruch 3 oder 4,
**dadurch gekennzeichnet, dass**
auf Basis der Schwarmdaten (6) eine benachbarte neue Spur (10) als Spuraufweitung und für den Spurwechsel freigegebene Spur erkannt wird.

6. Verfahren nach Anspruch 5,
**dadurch gekennzeichnet, dass**
die benachbarte Spur (10 ,11) durch Vergleichen von Schwarmdaten (6) von unterschiedlichen Kraftfahrzeugen (13) auf Basis von unterschiedlich gefahrenen Wegen (x₁, x₂) der Vielzahl von Kraftfahrzeugen (13) erkannt wird.

7. Computerprogrammprodukt mit Programmcodemitteln, welche eine elektronische Recheneinrichtung (4) dazu veranlassen, wenn die Programmcodemittel auf der elektronischen Recheneinrichtung (4) abgearbeitet werden, die Schritte des Verfahrens nach einem der Ansprüche 1 bis 6 durchzuführen.

8. Spurwechselassistenzsystem (2) zum Erzeugen einer Spurwechselfreigabe (8) eines zumindest teilweise assistiert betriebenen Kraftfahrzeugs (1), mit zumindest einer Erfassungseinrichtung (3) und mit einer elektronischen Recheneinrichtung (4), wobei das Spurwechselassistenzsystem (2) zum Durchführen eines Verfahrens nach einem der Ansprüche 1 bis 6 ausgebildet ist.

## Claims

1. Method for generating, by means of a lane change assistance system (2), a lane change clearance (8) for a motor vehicle (1) which is operated in an at least partially assisted manner, in which a lane (10, 11) of a roadway (12) having at least two lanes (9, 10, 11), said lane being adjacent to an ego lane (9), is detected by means of a detecting device (3) of the lane change assistance system (2), and, depending on a criterion, the detected adjacent lane (10, 11) is assessed for the lane change clearance (8) by means of an electronic computing device (4) of the lane change assistance system (2) to determine whether a lane change to the adjacent lane (10, 11) is possible, and in the case of a positive assessment, the lane change clearance (8) is generated by means of the electronic computing device (4), wherein
at least one driving dynamics parameter (v₁, x₁, v₂, x₂, 14) of the motor vehicle (1) and/or of an additional motor vehicle (13) is considered as the criterion for assessing whether a lane change to the adjacent lane (10, 11) is possible,
**characterized in that**
an exit lane (11) of the roadway (12) is detected and assessed as the adjacent lane (10, 11), and if an exit lane (11) is identified, the lane change clearance (8) is blocked, wherein an exit lane (11) is identified on the basis of speed comparisons of the motor vehicle (1) on the ego lane (9) and/or of additional motor vehicles (13) on the ego lane (9) and on the adjacent lane (10, 11), wherein if the speed (v1, v2) on the ego lane (9) is greater than on the adjacent lane (10, 11), an exit lane (11) can be inferred.

2. Method according to claim 1,
**characterized in that**
a current driving direction (14) of the motor vehicle (1) and/or of the additional motor vehicle (13) is considered to be the driving dynamics parameter (v₁, x₁, v₂, x₂, 14).

3. Method according to claim 1 or 2,
**characterized in that**
the lane change assistance system (2) has a swarm data receiving device (5) and, by means of the swarm data receiving device (5), driving dynamics swarm data (6) relating to a plurality of additional motor vehicles (13) are received from an electronic computing device (7) external to the motor vehicle, and the driving dynamics swarm data (6) are considered to be the criterion in the assessment.

4. Method according to claim 3,
**characterized in that**
speeds (v₁, v₂) of additional motor vehicles (13) are received and assessed as driving dynamics swarm data (6).

5. Method according to claim 3 or 4,
**characterized in that**
on the basis of the swarm data (6), an adjacent new lane (10) is identified as a widening lane and as a lane cleared for the lane change.

6. Method according to claim 5,
**characterized in that**
the adjacent lane (10,11) is identified by comparing swarm data (6) from different motor vehicles (13) on the basis of different driven routes (x₁, x₂) of the plurality of motor vehicles (13).

7. Computer program product comprising program code means which cause an electronic computing device (4) to carry out the steps of the method according to any of claims 1 to 6 when the program code means are processed on the electronic computing device (4).

8. Lane change assistance system (2) for generating a lane change clearance (8) for a motor vehicle (1) which is operated in an at least partially assisted manner, which system comprises at least one detecting device (3) and an electronic computing device (4), wherein the lane change assistance system (2) is designed to carry out a method according to any of claims 1 to 6.

## Revendications

1. Procédé permettant de générer une autorisation de changement de voie (8) d'un véhicule automobile (1) commandé au moins partiellement de manière assistée au moyen d'un système d'assistance au changement de voie (2), dans lequel, au moyen d'un dispositif de détection (3) du système d'assistance au changement de voie (2), une voie (10, 11) voisine d'une voie propre (9) d'une chaussée de circulation (12) comportant au moins deux voies (9, 10, 11) est détectée, et en fonction d'un critère, la voie (10, 11) voisine détectée est évaluée pour l'autorisation de changement de voie (8) au moyen d'un dispositif de calcul électronique (4) du système d'assistance au changement de voie (2), pour établir si un changement de voie sur la voie (10, 11) voisine est possible, et en cas d'évaluation positive, l'autorisation de changement de voie (8) est générée au moyen du dispositif de calcul électronique (4), dans lequel
au moins un paramètre (v₁, x₁, v₂, x₂, 14) de dynamique de conduite du véhicule automobile (1) et/ou d'un autre véhicule automobile (13) est pris en compte comme critère lors de l'évaluation établissant si un changement de voie sur la voie (10, 11) voisine est possible,
**caractérisé en ce que**
une voie de sortie (11) de la chaussée de circulation (12) est détectée et évaluée en tant que voie (10, 11) voisine et, lorsqu'une voie de sortie (11) est reconnue, l'autorisation de changement de voie (8) est supprimée, dans lequel sur la base de comparaisons de vitesse du véhicule automobile (1) sur la voie propre (9) et/ou d'autres véhicules automobiles (13) sur la voie propre (9) et sur la voie (10, 11) voisine, une voie de sortie (11) est reconnue, dans lequel si la vitesse (v1, v2) sur la voie propre (9) est supérieure à celle sur la voie (10, 11) voisine, on peut alors conclure à une voie de sortie (11).

2. Procédé selon la revendication 1,
**caractérisé en ce que**
une direction de déplacement actuelle (14) du véhicule automobile (1) et/ou de l'autre véhicule automobile (13) est prise en compte comme paramètre (v₁, x₁, v₂, x₂, 14) de dynamique de conduite.

3. Procédé selon la revendication 1 ou 2,
**caractérisé en ce que**
le système d'assistance au changement de voie (2) présente un dispositif de réception de données en essaim (5) et, au moyen du dispositif de réception de données en essaim (5), des données en essaim (6) de dynamique de conduite concernant une pluralité d'autres véhicules automobiles (13) sont reçues par un dispositif de calcul électronique (7) externe au véhicule et les données en essaim (6) de dynamique de conduite sont prises en compte comme le critère lors de l'évaluation.

4. Procédé selon la revendication 3,
**caractérisé en ce que**
des vitesses (v₁, v₂) d'autres véhicules automobiles (13) sont reçues et évaluées en tant que données en essaim (6) de dynamique de conduite.

5. Procédé selon la revendication 3 ou 4,
**caractérisé en ce que**
sur la base des données en essaim (6), une nouvelle voie (10) voisine est reconnue comme un élargissement de voie et une voie libérée pour le changement de voie.

6. Procédé selon la revendication 5,
**caractérisé en ce que**
la voie (10, 11) voisine est reconnue en comparant des données en essaim (6) de différents véhicules automobiles (13) sur la base de trajets (x₁, x₂) parcourus différemment par la pluralité de véhicules automobiles (13).

7. Produit programme d'ordinateur comportant des moyens de code de programme, qui amènent un dispositif de calcul électronique (4) à réaliser les étapes du procédé selon l'une des revendications 1 à 6 lorsque les moyens de code de programme sont traités par le dispositif de calcul électronique (4).

8. Système d'assistance au changement de voie (2) permettant de générer une autorisation de changement de voie (8) d'un véhicule automobile (1) commandé au moins partiellement de manière assistée, comportant au moins un dispositif de détection (3) et comportant un dispositif de calcul électronique (4), dans lequel le système d'assistance au changement de voie (2) est conçu pour réaliser un procédé selon l'une des revendications 1 à 6.
